# EUROPEAN PATENT APPLICATION

(11) **EP 1 013 387 A2**
(43) Date of publication of application: **28.06.2000**
(21) Application number: 99310441.3
(22) Date of filing: 22.12.1999
(51) Int. Cl.: B29B 17/00, B02C 19/14, B30B 9/32

(54) **Waste product processing apparatus and methods**

(30) Priority: 22.12.1998 GB 9828390
(71) Applicant: Newman, Philip William Llewelyn, c/o Alchemy Metals Ltd, Benington, Hertfordshire SG2 7BX (GB)
(72) Inventor: Newman, Philip William Llewelyn, c/o Alchemy Metals Ltd, Benington, Hertfordshire SG2 7BX (GB)
(74) Representative: Paget, Hugh Charles Edward

(57) **Abstract**

An apparatus for processing waste items, the apparatus comprising means for conducting waste items along a path through a plurality of processing stages, each stage including means for mechanically deforming the waste items.

## Description

The present invention relates to apparatus and methods for processing waste products, such as discarded containers. The apparatus and methods are particularly suitable for processing plastic bottles, such as PET bottles.

There is a pressing economic and environmental need for techniques for processing, and where possible recycling, household waste products, such as discarded liquid containers. Among the commonest examples of such containers are cans (including tins) and bottles made of plastic (e.g. PET bottles, or HDPE bottles which are increasingly used for packaging milk). Conventionally, collection facilities for such containers are provided in public sites, such as supermarket car parks. Individuals deposit their containers at such public sites, where they are stored for transportation to a central processing/recycling location. There the containers are sorted out and placed into a chamber, and the chamber compressed by a press mechanism to thereby compress the containers.

Among the drawbacks of this known system are that PET or HDPE containers have a tendency to "spring back" once the compressive force is removed, to at least partially regain their original shape. Furthermore, experience has shown that PET bottles with their screw caps in place are astonishingly strong, and resist compression even when great compressive forces are applied to them within the chamber. Therefore, conventionally the screw tops are manually removed before the bottles are placed in the chamber.

In its most general terms, the present invention proposes processing waste items in a manner which is particularly suitable for waste items such as plastic bottles.

In a first aspect, the invention provides an apparatus for processing waste items, the apparatus comprising means for conducting the waste items sequentially along a path through a plurality of processing stages, each stage including means for mechanically deforming the waste items. For example, in at least one stage the deformation may include compressing the waste items.

The present inventor has found that by repeatedly deforming a plastic bottle it is possible to obtain permanent deformation (compression) of the bottle, so that subsequent processing or disposal is made much more efficient.

There are various possibilities for the deforming means which can be used in the present invention. A first possibility is to arrange for the path along which the waste items are conducted to intersect with one or more rollers. For example, two rollers may meet at or near the path of the waste items, so that the waste items must pass between them. The degree of compression effected by the rollers can then be chosen by arranging their closest curved surfaces to be at a predetermined spacing, by arranging the rollers to be resiliently urged together, or preferably, by arranging the rolling surface of the rollers to be resilient. The spacing, the force with which the rollers are urged together, or alternatively the degree of resilience of the rolling surface, may, be adjustable.

Instead of two rollers, it is possible for there to be one roller which presses waste items against another surface, such as a conveyer belt (a "rolling road"). Again, the spacing between the roller and the belt, or the force with which the roller presses the belt, may be adjustable. Preferably, the velocity of the rolling surface of the roller which faces the conveyor belt is substantially equal to the velocity of the belt itself.

The roller(s) (and conveyor belt if present) may be driven by a conventional motor. It is envisaged that the roller(s) should preferably turn at at least 200 RPM, or more preferably at least 500 RPM. Rotation speeds of up to 200 RPM are presently envisaged.

The rotation of the roller(s) and belt (if any) may constitute all or part of the means for conducting waste items along the path.

Preferably the machine further includes a fan mechanism having blades. The fan may be arranged to generate an air flow which draws waste items into the apparatus through an input aperture and along at least part of the path.

Furthermore, the blades of the fan may be arranged to intersect the path of the waste items, whereby when the blades collide with the waste items so as to deform them. The inventor has found that the arrangement of the fan and input aperture may be optimised depending upon the sort of waste items being processed. If the waste items are cans, then the fan and input aperture are preferably arranged so that the cans contact a radially inward portion of the blades, where they suffer severe mechanical deformation. However, in the case of plastic bottles, it is more preferable that the plastic bottles contact a radially outer area of the blades. In this location they suffer a lower degree of mechanical deformation, but this degree of deformation is adequate if it is combined with the deformation produced by later stages of the apparatus. That is, in the case of plastic bottles, a lower level of deformation applied several times is most efficient.

Although the roller and fan arrangements described above are preferably used as part of the multi-stage apparatus described, they in fact are not limited in this respect, and constitute independent aspects of the invention.

A further independent aspect of the invention is a method of processing waste items using an apparatus as described above (i.e. with multi-stages, roller compression and/or fan deformation).

It is envisaged that an apparatus according to the invention may be operated in a location where members of the public have deposited waste items (e.g. a supermarket public recycling area). In this location the waste items are processed, including compression, so that they can be transported efficiently to a different site where they can be recycled, burnt, or otherwise processed.

Rather than permanently siting an apparatus according to the invention in the public location, it is preferable to locate the apparatus on a vehicle (e.g. a lorry), so that it can be transported to the location where it is to be operated. Waste items can then be fed sequentially into the apparatus, and compressed to make a dense load for efficient transportation to the recycling site.

Further preferred aspects of the invention will now be described with reference to a single exemplary embodiment, with reference to the accompanying figures in which:
Figure 1 is a cut-away side view of the embodiment;
Figure 2 is a cut-away front view of the embodiment;

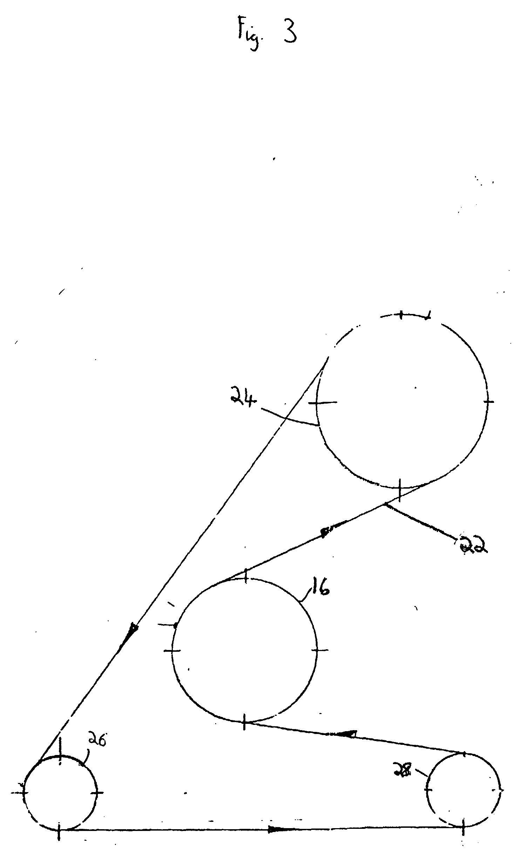

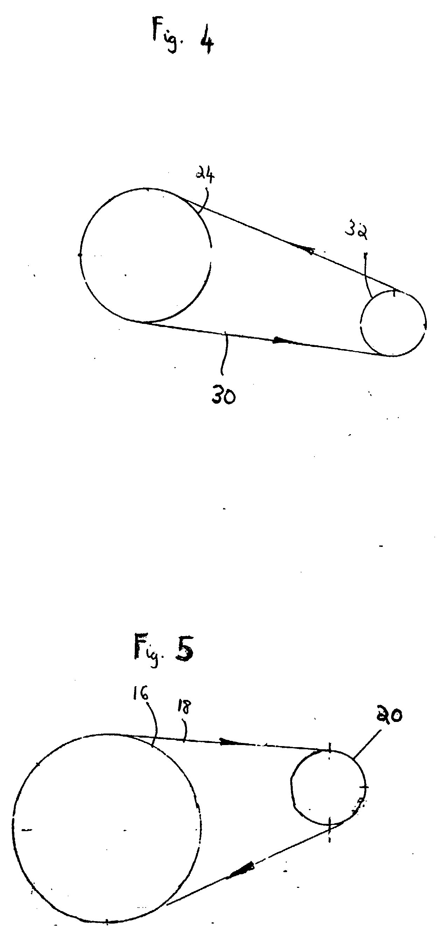

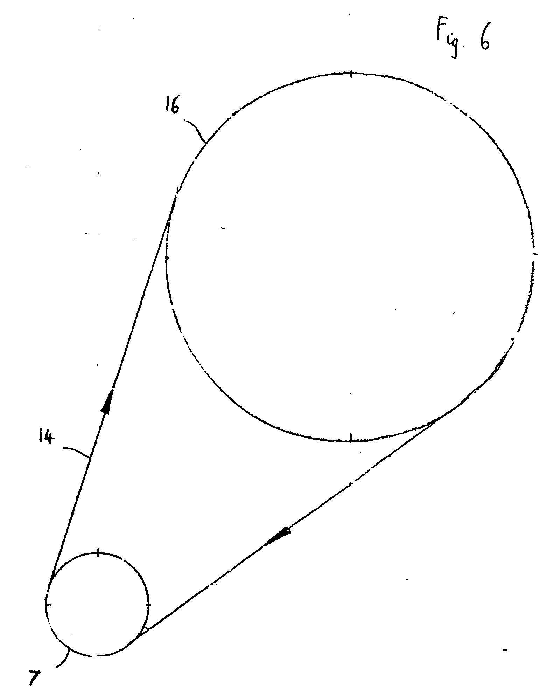

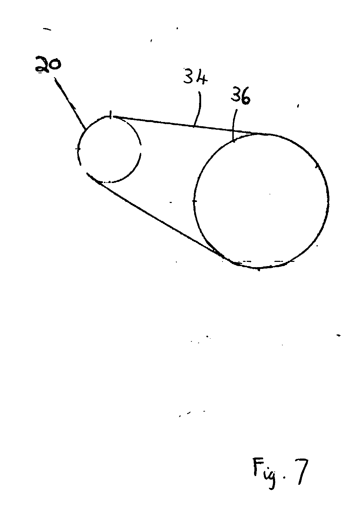

Figures 4-7 show belt arrangements forming part of the view of Figure 1;
Figure 8 shows a side view of an optional set of pinch rollers for connection to the embodiment of Figure 1; and
Figure 9 shows a front view of the pinch rollers of Figure 8.

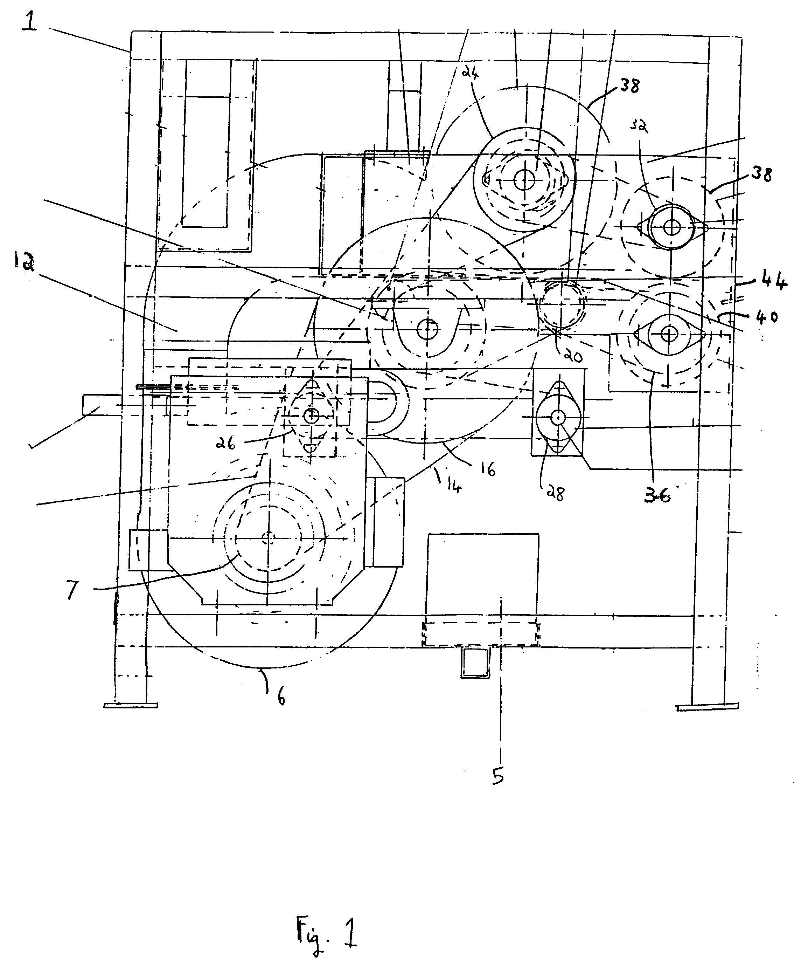

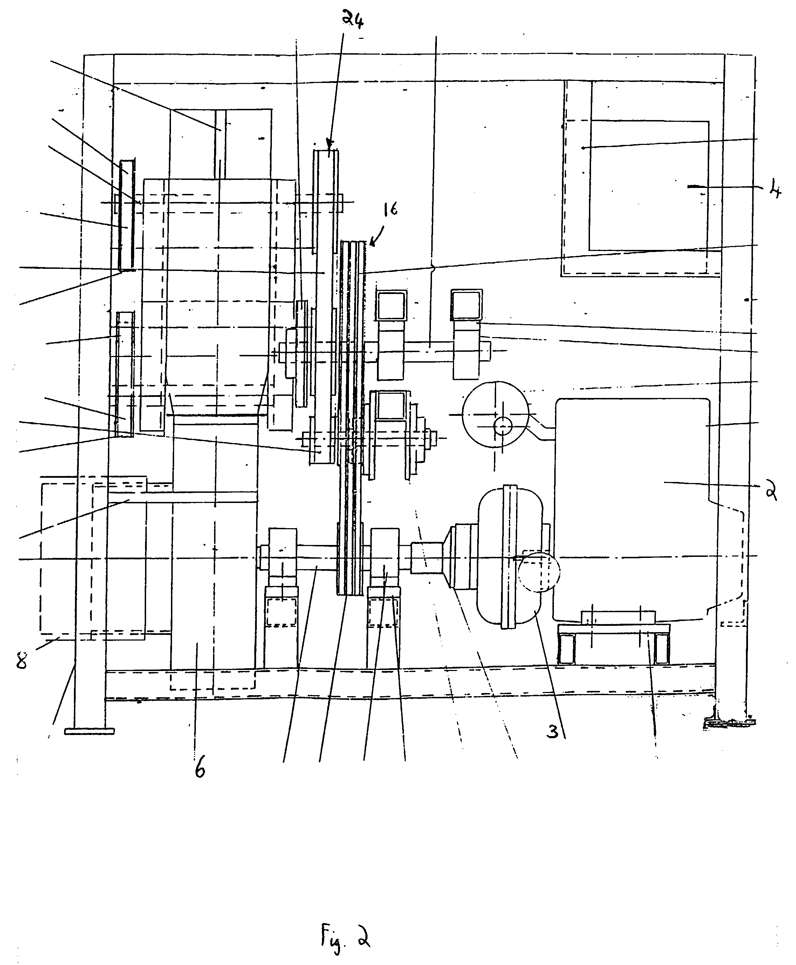

Referring to Figures 1 and 2, the embodiment includes an outer metal casing 1, and within it a motor 2 driven by petrol supplied from a tank 4. The motor is started using electrical power from battery 5. The output of the motor 2 is converted by a gear box 3, having an output axel which is co-axial with a fan located within a blade box 6. Although the fan is not shown in detail, it has six blades extending radially from a central hub 7. The blade box is preferably made from wear resilient, work-hardened steel. The blades themselves may be made of wear-resistant steel, but are not work-hardened, to prevent cracking. The blades preerably have a squared-off end profile as viewed along the axis of the fan (that is the radially-extending edges of the blade meet the circumferentially outer edge at respective corners).

The interior of the blade box 6 communicates with an input aperture defined by a tube 8. The blade box 6 further communicates with a tube 12 which curves in the plane of the fan rotation. The fan hub is connected by a belt 14 to a layshaft 16. In use, the hub is rotated at about 3000 RPM, causing the layshaft to rotate at about 956 RPM. The layshaft 16 is in turn used to drive a drive belt 18 and a belt pulley 20. The layshaft 16 is further used to drive a belt 22, which in turn drives a wheel 24 and idlers 26, 28. Typically, the wheel 24 rotates at 763 RPM, while each of the idlers 26, 28 rotates at about 2091 RPM. The location of the idler 28 is made adjustable.

Wheel 24 drives a belt 30, which turns a top pinch roller 32 at 1365 RPM. The belt roller 20 drives a belt 34 which turns a lower pinch roller 36 at the same angular velocity, that is 1365 RPM.

In use, the tube 8 is connected to a section of tubing, such as standard 12 inch diameter bore plastic reinforced with steel wire. The tube is flexible, and may have a length of say 30 metres. Its distal end is located near a supply of waste items such as plastic bottles. The bottles are sucked by the action of the fan along the flexible tube, through the input aperture defined by the tube 8 and into the interior of the blade box 6. There the plastic bottles collide with the blades, the plastic tops (e.g. screw tops) are torn off, and their volume is reduced by about 50%. The stream of air then forces the bottles in a path along the tube 12 to where an outer surface 38 of a tyre surrounding the wheel 24 contacts the belt 18. The belt 18 ("rolling road") is supported by a steel sheet (not shown in the figures). Plastic bottles therefore pass between the belt 34 and the radially outer surface of the tyre 38.

In practice, rather than a single tyre, there are two co-axial tyres of equal size and shape axially spaced on the wheel 24. Between the two tyres are one or more (preferably three) blades having a circular outer edge which is co-axial with the wheel 24 and has a radius equal to the radius of the outer surface 38 of the tyres.

The primary purpose of the impact on the bottles by the surface 38 of the tyre is to drag them along the path within the apparatus. However, the tyre further achieves a flattening of the plastic bottles to about 20-30% of their original size.

From the belt 34, the path of the bottles leads the waste items between upper pinch roller 32 and lower pinch roller 36. These two rollers have respective radially outer surfaces 38, 40 between which the waste must pass. Unlike the surface 38, the rolling surface of the rollers 32, 36 is not resilient, and is preferably coated with a hardening material. The two pinch rollers perform additional flattening, reducing the size to about 10-15% of the original size. Because of the high speed of the pinch rollers 32, 36 the flattened bottles are ejected with some force out of an ouput aperture 44 of the apparatus.

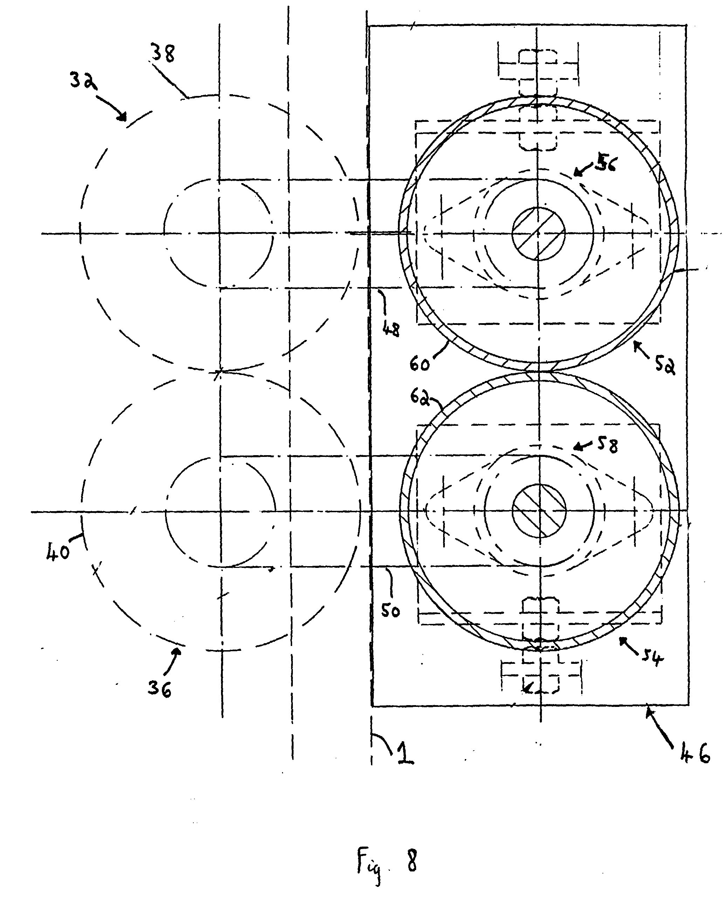

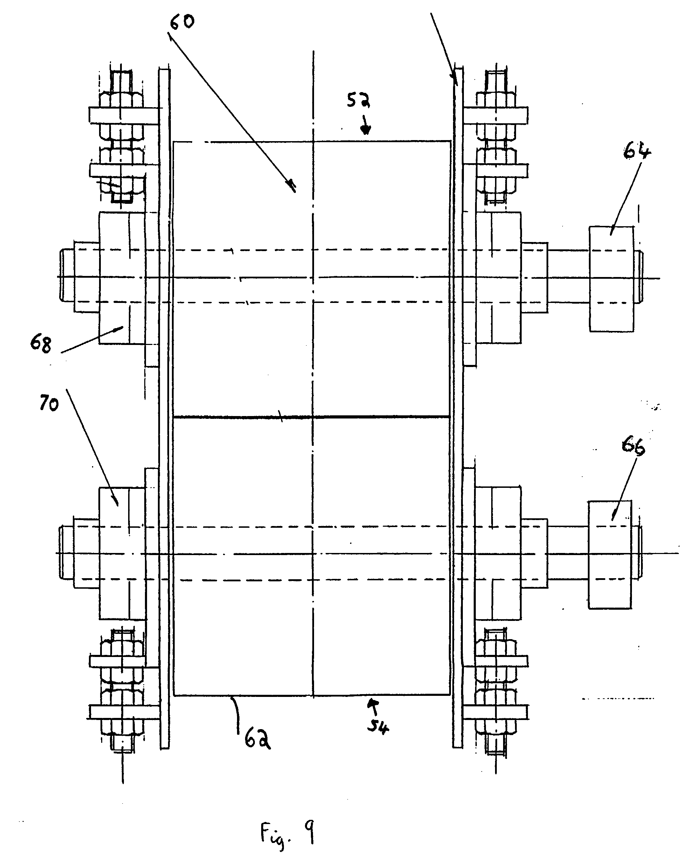

As shown in Figures 8 and 9, an additional pair of pinch rollers may be provided at this downstream portion of the path. The pinch rollers are provided within a housing 46 which is attachable to the frame 1. The additional pinch rollers 52, 54 consist of respective central hubs 56, 58, and have radially outer surfaces 60, 62. The additional pinch rollers 52, 54 are driven via respective belts 48, 50 from the upper and lower pinch rollers 32, 36 within the main frame 1.

As shown in Figure 9, the additional pinch rollers 52, 54 turn on respective axels which ride within bearings 64, 66, 68, 70.

The optional additional pair of pinch rollers 52, 54 are designed to crease PET bottles better, thus ensuring maximum reduction of volume of the plastic bottles.

The complete machine (frame 1 and additional housing) is designed to make the machine portable and robust enough to be handled by a fork-lift truck into the rear of a vehicle.

### ADDITIONAL INFORMATION

### 1) Motor Details:

The motor is a V twin petrol engine, Manufacture is Honda.

### 2) Blade:

This is the fan blade, and is driven directly from the motor with an integral shaft. The rotary fan being keyed to the shaft. The assembly has 6 blades to give the required air transference. The blades (impellers) are made of a wear resistant steel, such as ABRO 400.

### 3) Blade box:

This is the fan cowling and is of mild steel structure with minimum clearances around the fan blade. The cowl being in two parts, bolted together with a circular inlet and square outlet. The casing is made from a work hardening, wear-resistant steel, such as ABRO M.

### 4) Battery:

This is a standard 12 volt car battery used for starting the motor on a push button start.

### 5) Gearbox:

This is a fluid coupling used to take up any shock loading of the drive to protect the motor.

### 6) 12"Dia tubing:

Standard 12" dia bore plastic reinforced with steel wire, flexible tube.

### 7) Pneumatic wheels:

These are two standard trailer wheels and tyres using a normal pressed steel wheel with a pneumatic tyre fitted size 350x8.

### 8) Rolling road:

To simulate a roller road a small belt conveyor is used and is fitted underneath the wheels. The belt conveyor has a steel bedplate with a crowned drive drum and an adjustable tail drum. The belt is a PVC reinforced belt with a vulcanised joint to accept high speed running.

### 9) Pinch rollers:

Situated after the rolling road and consisting of two rubber covered rollers and which are adjustable for gap and driven from the rolling road to give a mangle effect to flatten the bottles further. The rolling surfaces of the pinch rollers are coated with a plastic material to increase their hardness (e.g. a tank track material covering).

### 10) New drive belt:

The drive for the rolling road belt is a 25mm wide timing belt with a 98M20 pulley on the layshaft (229 dia) and a 38M20 pulley to the belt drum (76.39 dia).

## Claims

1. An apparatus for processing waste items, the apparatus comprising means for conducting waste items along a path through a plurality of processing stages, each stage including means for mechanically deforming the waste items.

2. An apparatus according to claim 1, in which in at least one said stage, the deforming means comprises means for compressing the waste items.

3. An apparatus according to claim 2 in which in at least one stage the deforming means comprises one or more rollers arranged to intersect the path and compress the waste items.

4. An apparatus according to claim 3 in which in at least one stage the deforming means comprises a roller having a rolling surface facing a conveyor belt, said path passing between the roller and the conveyor belt.

5. An apparatus according to any preceding claim, in which the means for conducting waste items comprises a fan having blades, the fan being arranged to generate an air flow for drawing waste items into the apparatus through an input aperture and along at least part of said path.

6. An apparatus according to claim 5 in which the blades intersect said path, whereby the blades collide with and deform the waste items, the fan constituting one of said stages.

7. An apparatus according to claim 6 in which only a radially outer portion of the blades intersects with said path.

8. An apparatus for processing waste items, the apparatus comprising a fan having blades, the fan being arranged to generate an air flow for drawing waste items into the apparatus through an input aperture and along a path, the blades intersecting the path, whereby the blades collide with and deform the waste items.

9. An apparatus for processing waste items, the apparatus comprising means for conducting waste items sequentially along a path, and one or more rollers arranged to intersect the path and compress the waste items.

10. A method of processing waste items comprising conducting waste items along a path through a plurality of processing stages, and in each stage mechanically deforming the waste items.

11. A method of processing waste items comprising sequentially receiving waste items, compressing said waste items as they are received, and storing said waste items.

12. A method according to claim 11 including subsequently transporting an accumulated plurality of said compressed waste items to a recycling location.

13. A method according to claim 10, claim 11 or claim 12 in which said items are discarded containers.

14. A method according to claim 10, claim 11 or claim 12 in which said items are plastic bottles, such as PET bottles or HDPE milk bottles.

15. An apparatus substantially as disclosed herein with reference to the accompanying drawings.

16. A method substantially as disclosed herein with reference to the accompanying drawings.
